# EUROPÄISCHE PATENTANMELDUNG

(11) **EP 3 372 447 A1**
(43) Veröffentlichungstag der Anmeldung: **12.09.2018**
(21) Anmeldenummer: 17159315.5
(22) Anmeldetag: 06.03.2017
(51) Int. Cl.: B60P 1/64, B60P 1/00

(54) **VORRICHTUNG ZUR ANORDNUNG AUF DER LADEFLÄCHE EINES PICK-UP-FAHRZEUGS**

(71) Anmelder: Waldschmidt, Kilian, 4600 Olten (CH)
(72) Erfinder: Waldschmidt, Kilian, 4600 Olten (CH)
(74) Vertreter: Schalch, Rainer

(57) **Zusammenfassung**

Bei einer Vorrichtung zur Anordnung auf der Ladefläche (12) eines Pick-up-Fahrzeugs (10) wird ein Rahmen (1) bereitgestellt, auf welchen mindestens ein Aufbauelement aufgesetzt werden kann. Es sind Befestigungsmittel (3) vorgesehen durch welche der Rahmen auf der Ladefläche (12) aufliegend durch die Befestigungsmittel (3) an den Verzurrösen (19) des Fahrzeugs lösbar befestigbar ist. Für die Fixierung des jeweiligen Aufbauelements am Rahmen ist eine Halteanordnung mit ersten Halteteilen am Rahmen (1) und zweiten Halteteilen an dem Aufbauelement vorgesehen, wobei das Aufbauelement mittels der Halteanordnung lösbar am Rahmen fixierbar ist. Dies erlaubt eine einfache, schnelle und sichere Anordnung von Aufbauten auf einem Pick-up-Fahrzeug ohne einen Eingriff in das Fahrzeug selber.

## Beschreibung

### Gebiet der Erfindung

Die Erfindung betrifft eine Vorrichtung zur Anordnung auf der Ladefläche eines Pick-up-Fahrzeugs sowie ein Aufbauelement für eine solche Vorrichtung. Ferner betrifft die Erfindung ein Pick-up-Fahrzeug mit einer solchen Vorrichtung und ein Verfahren zur Beladung eines Pick-up-Fahrzeugs.

### Hintergrund

Ein Pick-up-Fahrzeug oder kurz "Pick-up" ist ein Personenkraftwagen oder Geländewagen mit ebener, offener Ladefläche (Pritsche, engl. "cargo bed"). Die Ladefläche eines solchen Pick-up-Fahrzeugs ist mit Gegenständen beladbar und zur Sicherung der Ladung sind in der Regel vom Hersteller als Originalausrüstung Ösen an mehreren Stellen der Ladefläche vorgesehen, welche das Sichern bzw. Verzurren der Ladung mittels Gurten oder Netzen erlauben. Solche "Verzurrösen" sind vom Fahrzeughersteller für eine bestimmte Belastung ausgelegt.

Es ist auch bekannt, auf der Ladefläche von Pick-up-Fahrzeugen Aufbauten für kommerzielle Bedürfnisse oder für Freizeitaktivitäten vorzusehen, was mittels Spezialaufbauten erfolgt, die sich auf dem Chassis des Fahrzeugs abstützen und an diesem befestigt werden. Dies gilt sowohl für Pick-ups mit klassischem Aufbau mit einem Leiterrahmen, als auch für Pick-ups, die auf einer selbsttragenden PKW-Karosserie basieren. Solche Spezialaufbauten sind aufwändig und schränken jeweils die Benutzbarkeit des Fahrzeugs für andere Zwecke stark ein. Beim Wiederverkauf des Fahrzeugs können die vorgenommenen Eingriffe den Wert des Fahrzeugs spürbar mindern. In DE 102 40 214 A1 wird ein Lademodul für ein Pick-up-Fahrzeug gezeigt, welches separat vom Pick-up beladen und entladen werden kann und zum Beispiel als Wanne ausgebildet ist. Das Lademodul wird mittels eines Krans auf die Ladefläche gesetzt oder kann auf die Ladefläche geschoben werden, wozu auf der Ladefläche Schienen vorgesehen werden. Für den Fachmann klar ersichtlich, erfolgt die Verbindung zu dem Chassis des Fahrzeugs über in der Schrift erwähnte spezielle Klemm-, Schraub- und/oder Steckverbindungen, die aber nicht im Detail erläutert werden. Deren Einbau in das Pick-up-Fahrzeug führt aber zu den vorgenannten Nachteilen. WO 2010/115222 A2 zeigt eine spezielle "support platform" mit Rollen und Rädern, die es bezweckt, das Beladen bzw. Entladen eines Pick-ups zu erleichtern, indem diese "support platform" von der Ladefläche weggezogen werden kann und dann selbststehend ist. Das Dokument schlägt zur Befestigung der "support platform" während des Transports vor, dass die "support platform" mit ihrer Form an die Ladefläche angepasst ist, um dort gehalten zu werden. Alternativ werden spezielle Befestigungsklammern (brackets) vorgeschlagen, die zuvor im Ladebereich des Pick-ups befestigt werden müssen. Somit wird dem Fachmann auch mit diesem Dokument eine spezielle Befestigung am Chassis des Fahrzeugs mit entsprechendem Eingriff am Fahrzeug und den genannten Nachteilen vorgeschlagen.

### Darstellung der Erfindung

Der Erfindung liegt die Aufgabe zu Grunde, eine verbesserte Vorrichtung zur Nutzung der Ladefläche eines Pick-up-Fahrzeugs zu schaffen.

Diese Aufgabe wird mit einer Vorrichtung gemäss Anspruch 1 gelöst.

Dadurch, dass ein Rahmen und Befestigungsmittel vorgesehen sind, welche es erlauben, den Rahmen auf der Ladefläche aufliegend mittels der Befestigungsmittel an den originalen, fahrzeugherstellerseitig bereits vorhandenen Verzurrösen oder Haken lösbar zu befestigen, ergibt sich eine einfache Montage des Rahmens am Pick-up ohne Eingriff in das Fahrzeug. Der Rahmen ist somit am Fahrzeug lediglich über diese originalen Verzurrösen oder Haken befestigt. Die am Rahmen und dem Aufbauelement der Vorrichtung vorgesehene Halteanordnung mit zusammenwirkenden Halteteilen am Rahmen und am Aufbauelement erlaubt es, an dem Rahmen beliebige Aufbauelemente zu fixieren, ohne dass diese am Fahrzeug noch auf andere Weise befestigt werden müssen. Das Aufbauelement ist somit am Rahmen - und damit über den Rahmen am Fahrzeug - nur über die Halteanordnung befestigt. Diese Kombination aus dem Rahmen und dem Aufbauelement der Erfindung mit den zugehörigen Befestigungsteilen und der Halteanordnung erlaubt eine einfache und schnelle Beladung und Entladung des Fahrzeugs mit verschiedenen Aufbauelementen, welche über den Rahmen am Fahrzeug gesichert sind, so dass zusätzliche Sicherungsarbeiten entfallen können. Und dabei vermeidet diese Vorrichtung jeden Eingriff in das Fahrzeugchassis oder die Fahrzeugkarosserie. Bei einem Wiederverkauf des Fahrzeugs kann der Rahmen durch das Lösen der Befestigungsmittel spurlos entfernt werden. Auch bei einem Nichtgebrauch der Vorrichtung besteht die Möglichkeit, den Rahmen einfach zu entfernen und ihn für einen späteren Gebrauch wieder an den Verzurrösen zu befestigen.

Insbesondere ist der der Rahmen in der Art eines Leiterrahmens mit zwei Längsgliedern, einem endseitigen Querglied und mindestens einem davon beabstandeten weiteren Querglied ausgeführt, was einen stabilen und dennoch leichten Rahmen ergibt. Weiter können die Befestigungsmittel rahmenseitig am endseitigen Querglied sowie an je einem der Längsglieder angeordnet sein, insbesondere je an einem vertikalen Steg der Längsglieder, was eine besonders platzsparende Anordnung der Befestigungsmittel ergibt. Die Befestigungsmittel sind insbesondere als von Hand oder mit Werkzeug verkürzbare bzw. verlängerbare Befestigungselemente ausgeführt und insbesondere als Spannschlösser, was eine kostengünstige und robuste Ausführung ergibt, die ein einfaches Befestigen und Lösen bzw. Demontieren des Rahmens erlaubt. Eine besonders einfache Platzierung des Aufbauelements ergibt sich weiter, wenn die Halteanordnung so ausgestaltet ist, dass erste Halteteile des Rahmens und zweite Halteteile des Aufbauelements durch eine translatorische Relativbewegung zwischen Rahmen und Aufbauelement entlang den Längsgliedern des Rahmens in Eingriff bringbar sind.

Die Erfindung betrifft ferner ein Aufbauelement für die Vorrichtung, welches eine Plattform mit Aufnahmemitteln für weitere Aufbauten ist, oder welches eine Wanne oder ein Korb ist, oder welches eine Kabine ist, oder welches ein Fahrradträger ist. Weitere Ausgestaltungen von Aufbauelementen sind möglich. Insbesondere kann das Aufbauelement auch eine Plattform mit einem Kran umfassen oder einen Motorradträger. In jedem Fall kann der Benutzer des Pick-up-Fahrzeugs, sobald dieses mit dem Rahmen der Vorrichtung ausgerüstet ist, ein Aufbauelement nach seinen Bedürfnissen oder mehrere Aufbauelemente beschaffen, um das Pick-up-Fahrzeug für Beruf und/oder Freizeit optimal zu nutzen.

Ferner betrifft die Erfindung ein Pick-up-Fahrzeug, welches mit der erfindungsgemässen Vorrichtung ausgerüstet ist.

Der Erfindung liegt weiter die Aufgabe zu Grunde, ein Pick-up-Fahrzeug auf einfache Weise beladen und mit verschiedener Ausrüstung verwenden zu können.

Diese Aufgabe wird mit einem Verfahren nach Anspruch 9 gelöst.

Eine besonders einfache Ausführung des Verfahrens ergibt sich, wenn das auf den Rahmen aufgesetzte Aufbauelement mittels der Halteanordnung durch eine horizontale translatorische Verschiebung am Rahmen fixiert werden kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung eines Ausführungsbeispiels anhand der Figuren. Dabei zeigt:
Figur 1 eine schaubildliche Darstellung der Ladefläche eines Pick-up-Fahrzeugs sowie des Rahmens und der Befestigungsmittel einer Vorrichtung gemäss einem Ausführungsbeispiel der Erfindung;
Figur 2 eine schaubildliche Darstellung des Rahmens von Figur 1 mit einem darauf platzierten und an diesem fixierten Aufbauelement;
Figur 3 eine schaubildliche Darstellung eines Teils des Rahmens und der Ladefläche und eines Befestigungsmittels zur Verzurrung des Rahmens an einer originalen Öse der Ladefläche gemäss dem Beispiel von Figur 1;
Figur 4 eine schaubildliche Darstellung eines Teils des Rahmens und der Ladefläche und eines weiteren Befestigungsmittels sowie des Aufbauelements und der zusammenwirkenden Haltemittel am Rahmen und am Aufbauelement;
Figur 5 eine schaubildliche Ansicht eines weiteren Aufbauelements; und
Figur 6 eine schaubildliche Ansicht eines Aufbauelements, welches als Kabine ausgeführt ist.

### Weg(e) zur Ausführung der Erfindung

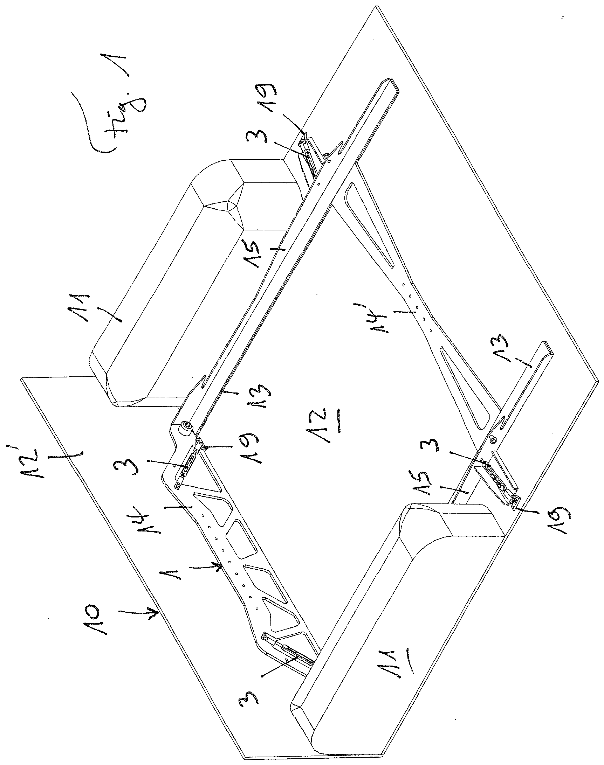

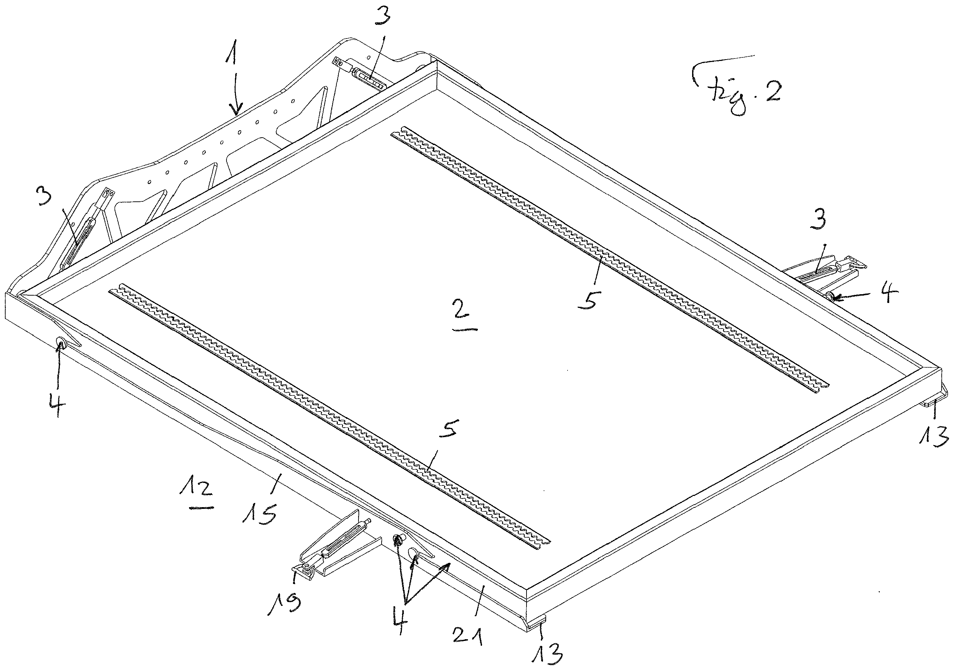

Die Figuren 1 und 2 zeigen eine schaubildliche Ansicht eines Ausführungsbeispiels der Erfindung. Ein Pick-up-Fahrzeug 10 ist lediglich mit seiner Ladefläche 12 und mit deren vorderen Abschluss 12' und den Radkästen 11 dargestellt. Weitere Elemente eines Pick-up-Fahrzeugs, wie die Fahrerkabine, Motor oder auch die Ladeklappe sind für die vorliegende Erfindung nicht wesentlich und sind hier nicht gezeigt. Das Pick-up-Fahrzeug kann ein Fahrzeug mit separatem Chassis oder ein Fahrzeug mit einer selbsttragenden Karosserie sein. Wesentlich ist, dass das Pick-up-Fahrzeug an bzw. auf seiner Ladefläche als Verzurrösen dienende Ösen oder Haken aufweist und für die erfindungsgemässe Vorrichtung bereitstellt, welche Verzurrösen vom Fahrzeughersteller als Originalausstattung vorgesehen sind. Dies ist praktisch bei allen auf dem Markt erhältlichen Pick-up-Fahrzeugen der Fall. In der Beschreibung werden die Begriffe "hinten" und "vorne" so verwendet, wie sie sich vom Fahrzeug her ergeben, so dass "vorne" in Fahrtrichtung zu sehen ist und "hinten" entgegen der Fahrtrichtung.

In Figur 1 ist ersichtlich, dass auf der Ladefläche 12 ein Rahmen 1 angeordnet ist. Dieser Rahmen 1 liegt auf der Ladefläche 12 auf, was ein vollflächiges Aufliegen mit der ganzen Rahmenunterseite sein kann oder ein teilflächiges Aufliegen, falls der Rahmen auf seiner Unterseite mit dafür vorgesehenen separaten Auflageflächen versehen ist. Mit Aufliegen auf der Ladefläche ist bei der vorliegenden Erfindung gemeint, dass dies direkt auf der Oberfläche der Ladefläche erfolgen kann oder allenfalls stattdessen auf einer Auflage, zum Beispiel einem Blech, erfolgen kann, welches zur Schonung der Ladefläche auf dieser liegt. Ein solches Blech muss aber die Verzurrösen frei lassen. Unter Aufliegen des Rahmens auf der Ladefläche wird somit eine unmittelbare oder indirekte Abstützung des Rahmens auf der Ladefläche verstanden.

Der Rahmen 1 ist so dimensioniert, dass er zu einem Typ Pick-up-Fahrzeug eines Herstellers passt, oder zu mehreren Typen eines Herstellers, oder dass er als Universalrahmen zu Fahrzeugen verschiedener Hersteller passt. Es ist bei der Dimensionierung zu beachten, dass der Rahmen 1 zwischen den Radhäusern 11 des Fahrzeugs Platz finden muss und dass die Befestigungsmittel so angeordnet sind, dass sie mit den Verzurrösen verbunden werden können. Ausserhalb der Radhäuser könnte der Rahmen 1 auch breiter ausgeführt sein als im Bereich der Radhäuser. Der Rahmen kann eine einfache Rahmenkonstruktion mit zwei Längsgliedern 13 und zwei Quergliedern 14 und 14' sein, wie in diesem Beispiel dargestellt. Auch ein anderer Rahmenaufbau ist möglich. Bevorzugt weist der Rahmen L-förmige Längsglieder 13 auf, so dass diese Glieder auch einen vertikalen Steg 15 aufweisen. Dieser Steg dient als Rahmenteil zur Versteifung des Rahmens. Ferner können diese Stege als Teile der Halteanordnung 4 zur Fixierung des Aufbauelements 2 am Rahmen dienen, was noch erläutert wird.

Der Rahmen 1 ist mit Befestigungsmitteln lösbar an den Verzurrösen des Pick-up-Fahrzeugs befestigt. In den Figuren 1 und 2 sind die Befestigungsmittel 3 ersichtlich, welche an den Verzurrösen 19 und am Rahmen 1 angreifen. Als Befestigungsmittel kommen alle dem Fachmann bekannte Mittel in Frage, mit welchen der Rahmen 1 an den Verzurrösen lösbar befestigt werden kann. Nachfolgend wird das bevorzugte Beispiel mit Spannschlössern im Detail erläutert. Mittels der Befestigungsmittel und den Verzurrösen wird der Rahmen 1 am Pick-up-Fahrzeug derart befestigt, dass er gegen die Ladefläche gezogen und damit stabil am Fahrzeug angeordnet ist. Entsprechend müssen die Befestigungsmittel am Rahmen so positioniert sein, dass sie bei der Befestigung an den Verzurrösen oder Haken der Ladefläche und bei der Betätigung der Befestigung die entsprechende Kraft auf den Rahmen ausüben. Andererseits soll auch eine seitliche Positionierung und Befestigung des Rahmens erfolgen. Dies wird bei der nachfolgenden beispielhaften Anordnung der Befestigungsmittel erreicht. Dabei sind die Befestigungsmittel 3 am vorderen Ende des Rahmens, beim Querglied 14, an diesem erhöht gegenüber der Ladefläche angeordnet, und dadurch zum Beispiel im Winkel von 45 Grad geneigt gegenüber der Ladefläche angeordnet, um die Zugkraftkomponente senkrecht zur Ladefläche und die Zugkraftkomponente horizontal zur Ladefläche ungefähr gleich gross zu machen. Eine entsprechende Anordnung der Befestigungsmittel kann mit der dargestellten erhöhten Brücke als Querglied 14 des Rahmens erreicht werden. Im hinteren Teil des Rahmens werden die Befestigungsmittel 3 ebenfalls erhöht gegenüber der Ladefläche am Rahmen befestigt. Es kann dort aber eine weniger erhöhte Position genügen, wie im Beispiel gezeigt, so dass ein spitzer Winkel zwischen diesen Befestigungsmitteln und der Ladefläche vorhanden ist. Damit wird die horizontale Komponente der Spannkraft, die den Rahmen an der Ladefläche hält, grösser als die vertikale Komponente. Dies ist bevorzugt, muss aber nicht zwingend so ausgeführt sein.

Der Rahmen wird so dimensioniert und dessen Material wird so ausgewählt, dass er im Betrieb des Fahrzeugs Lasten bis zur maximalen Traglast des Fahrzeugs aufnehmen kann und dass er über die Befestigungmittel bis zur maximalen, vom Fahrzeughersteller vorgegebenen Kraft, die auf die Verzurrösen wirken kann, belastbar ist. Der Rahmen ist in der Regel aus einem Metallmaterial ausgeführt, insbesondere aus einem nichtrostenden Metallmaterial ausgeführt. Eine Ausführung aus mehreren Materialien ist ebenfalls möglich, insbesondere kann der Rahmen auch faserverstärkten Kunststoff umfassen oder aus diesem bestehen.

In Figur 2 ist ersichtlich, wie ein Aufbauelement 2 am Rahmen mittels der Halteanordnung 4 fixiert ist. In diesem Beispiel ist das Aufbauelement 2 lediglich eine Plattform mit Aufnahmemitteln 5, zum Beispiel die gezeigten Lochleisten, für weitere Teile, wie zum Beispiel einen nicht dargestellten Werkzeugschrank oder allenfalls einen Kran. Das gezeigte bevorzugte Beispiel der Halteanordnung 4 wird an Hand von weiteren Figuren genauer beschrieben. Als Halteanordnung kommen indes alle dem Fachmann bekannten Kombinationen von Haltemitteln am Rahmen und am Aufbauelement in Frage, welche eine lösbare Fixierung des Aufbauelements am Rahmen bewirken können. Bevorzugt ist, dass Halteteile der Halteanordnung so ausgeführt sind, dass Halteteile des Rahmens und Halteteile des Aufbauelements durch eine translatorische Relativbewegung zwischen Rahmen und Aufbauelement in Eingriff bringbar sind. Dies erlaubt es, das Aufbauelement 2 zunächst auf dem Rahmen in einer Position aufzulegen, in welcher die Halteteile noch nicht ineinander greifen und dann eine Verschiebung des Aufbauelements vorzunehmen bzw. die translatorische Bewegung, mittels welcher die Halteteile des Rahmens und des Aufbauelements in Eingriff kommen. Die Halteteile können so ausgeführt sein, dass beim Erreichen der Endlage der Verschiebebewegung ein Einrasten des Aufbauelements am Rahmen mittels der Halteteile erfolgt oder es können zur Fixation in der Endlage separate Halteteile vorgesehen sein.

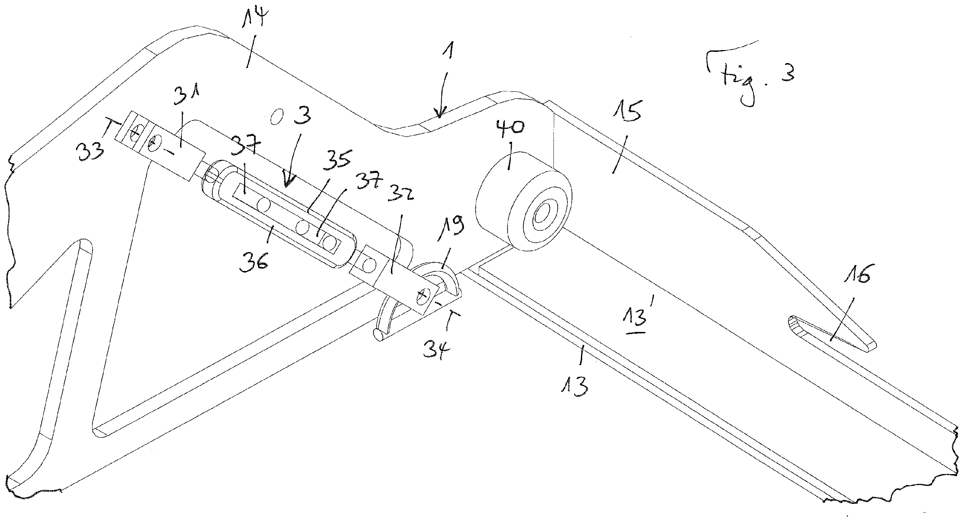

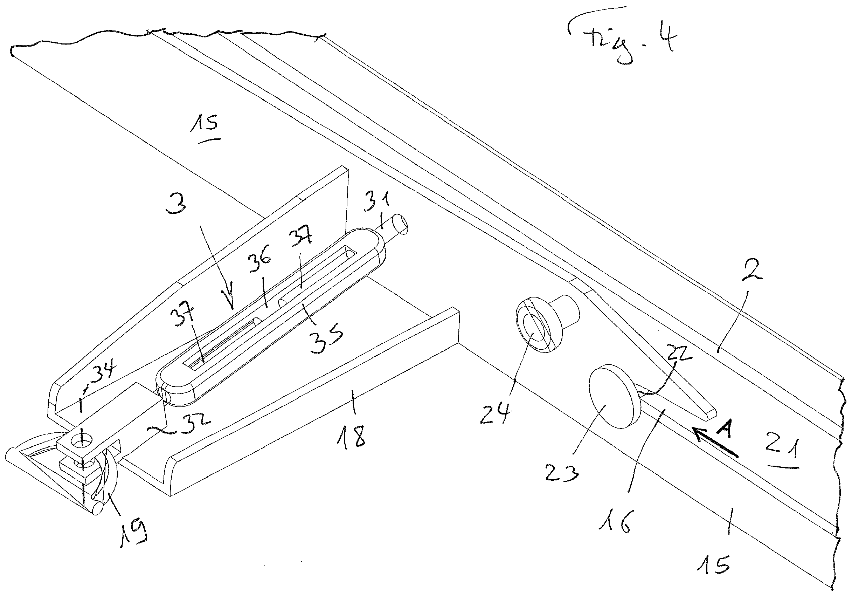

An Hand der Figuren 3 und 4 wird eine bevorzugte Ausführung der Befestigungsmittel für den Rahmen an den Verzurrösen erläutert. Mit diesen Figuren wird auch eine bevorzugte Ausführung der Halteanordnung 4 erläutert. Diese Ausführungen der Befestigungsmittel und der Halteanordnung sind aber unabhängig voneinander und es kann zu den gezeigten Befestigungsmitteln eine andere Ausführung der Halteanordnung vorgesehen sein oder zu der gezeigten Halteanordnung können andere Befestigungsmittel vorgesehen sein. Figur 3 zeigt das vordere Ende des Rahmens mit dem Querglied 14 und mit einem der Längsglieder 13. Auf dem Längsglied 13 kann eine Auflage 13' angeordnet sein, insbesondere eine reibungsvermindernde Auflage. Die Verzurröse 19 ist ersichtlich, welche zur Originalausstattung des Fahrzeugs gehört und vom Fahrzeughersteller für eine maximale Zugbelastung spezifiziert ist. Als Verzurröse könnte fahrzeugseitig auch ein hakenförmiges Halteglied vorgesehen sein, so dass der Begriff "Verzurröse" im Zusammenhang mit der vorliegenden Erfindung nicht notwendigerweise auf eine vollständig geschlossene Öse beschränkt ist. Das Befestigungsmittel 3 umfasst in diesem Beispiel ein Spannschloss 35 und je ein Zugteil 31, 32 am Ende des Spannschlosses. Mit dem einen Zugteil 31 ist das Spannschloss am Rahmen 1, hier an dessen Querglied 14 befestigt. Dazu kann das Zugteil 31 zur Aufnahme eines Gewindebolzens ausgestaltet sein, der hier nur als unterbrochene Linie 33 angedeutet ist, welcher Bolzen im Querglied 14 gehalten, zum Beispiel verschraubt ist. Mit dem anderen Zugteil 32 ist das Spannschloss 35 an der Öse 19 befestigt, wozu auch ein nur mit der unterbrochenen Linie 34 angedeuteter Bolzen vorgesehen sein kann, der durch die Öse und das Zugteil geführt ist und beidseits gesichert ist, zum Beispiel mit Muttern, die auf endseitigen Gewinden des Bolzens befestigt werden. Das Spannschloss 35 ist ein dem Fachmann bekanntes Element, in dessen Körper bzw. Joch 36 zwei Gewindebolzen 37 derart in Gewinden des Körpers angeordnet sind, dass bei Verdrehung des Körpers sich die Gewindebolzen aufeinander zu bewegen bzw. bei der umgekehrten Drehrichtung des Körpers sich die Gewindebolzen voneinander weg bewegen. Damit ergibt sich eine Verkürzung oder Verlängerung des Spannschlosses 35 durch Drehung von dessen Körper, so dass die Zugteile 31 und 32 den Rahmen 1 bei Verkürzung der Spannschraube gegen die Ladefläche des Pick-up-Fahrzeugs ziehen. Bei der gezeigten Ausführung mit dem geneigt angeordneten Befestigungsmittel 3 ergeben sich die erwähnten Kraftkomponenten in senkrechter und horizontaler Richtung, die bei einer Neigung von ca. 45 Grad des Befestigungsmittels im Wesentlichen gleich gross sind. Der Rahmen 1 wird somit mit einer senkrecht zur Ladefläche wirkenden Kraftkomponente gegen die Ladefläche gezogen und mit einer horizontalen Kraftkomponente gegen seitliche Bewegung gesichert, wenn die gegeneinander wirkenden horizontalen Kraftkomponenten der beiden Befestigungsmittel 3 berücksichtigt werden, die in Figur 1 ersichtlich sind und beide an dem vorderen Querglied 14 angreifen.

Die Halteanordnung 4 weist am Rahmen Halteteile zur Fixierung des Aufbauelements 2 auf, wobei ein Halteteil 16 als ein Maul in dem vertikal stehenden Steg 15 des Rahmens ausgeführt ist. Dieser Steg 15 ist im gezeigten Ausführungsbeispiel also sowohl ein Teil des Rahmens als auch ein Halteteil der Halteanordnung 4. In dieses Maul kann ein Bolzen des Aufbauelements eingreifen, wenn das Aufbauelement horizontal auf dem Rahmen translatorisch verschoben wird, was vorzugsweise in Richtung des vorderen Endes des Rahmens bzw. in Richtung auf das vordere Querglied 14 erfolgt. Der Bolzen sichert das Aufbauteil 2 gegen vertikale Bewegung und der Steg 15 verhindert, ebenfalls als Halteteil funktionierend, seitliche Bewegungen des Aufbauelements 2 im Zusammenhang mit dem gegenüberliegenden Steg 15 des Rahmens, was in Figur 1 und 2 ersichtlich ist. Die Seitenwände 21 des Aufbauelements bilden dabei Halteteile des Aufbauelements, die am Steg 15 anliegen. Ein Anschlagpuffer 40 kann zur Begrenzung des Verschiebeweges des Aufbauelements 2 nach vorne in Richtung auf das Querglied 14 vorgesehen sein, wobei seine Lage so mit dem Halteteil 16 bzw. dem Maul abgestimmt ist, dass der Bolzen des Aufbauelements im Maul ebenfalls seine Endlage erreicht, wenn das Aufbauelement die Endlage am Puffer 40 erreicht.

In Figur 4 ist eines der beiden hinteren Befestigungsmittel 3 ersichtlich und ein Teil des Aufbauelements mit seinen Haltemitteln. Das Befestigungsmittel 3 umfasst auch hier ein Spannschloss 35, zu dessen Funktion auf die zuvor gegebene Erläuterung verwiesen wird. Das Zugteil 32 dient zur Befestigung an einer der hinteren Verzurrösen 19, wozu auch hier ein nur mit der unterbrochenen Linie 34 angedeuteter Bolzen dienen kann, der beidseits mit Muttern gesichert sein kann oder allenfalls mit Splinten. Das Zugteil 31, das hier im sichtbaren Bereich vom Bolzen 37 des Spannschlosses 35 gebildet ist, ist nur teilweise dargestellt. Es verbindet das Spannschloss mit dem Rahmen 1 und greift in dessen vertikalen Steg 15 ein und ist dort auf Zug gesichert. Dazu kann der Gewindebolzen 37 des Spannschlosses einen im Steg 15 versenkten Kopf aufweisen, der in der Ansicht der Figur 4 nicht sichtbar ist. Der vertikale Steg 15 ist somit in diesem Beispiel auch ein Teil der Befestigungsmittel. Dieses Spannschloss 35 liegt im spitzen Winkel zur Ladefläche 12 mit dem bereits erläuterten Einfluss auf die Kraftkomponenten des Befestigungsmittels 3. Ein Ausleger 18 des Rahmens 1 kann an dieser Stelle zur Verstärkung des Rahmens dienen.

Der Steg 15 bildet auch an dieser Stelle eines der rahmenseitigen Halteteile 16 der Halteanordnung 4 durch seine Ausbildung als Maul. In dieses Maul greift ein Bolzen bzw. ein bolzenförmiges Halteteil 22 des Aufbauelements ein, wie bereits zuvor im Zusammenhang mit Figur 3 erwähnt. Das Halteteil 22 ist dabei in Figur 4 in der Stellung gezeigt, in welcher das Aufbauelement ganz in Richtung des Pfeils A zum vorderen Ende des Rahmens geschoben worden ist, so dass das Aufbauelement am zuvor erwähnten Anschlagpuffer anliegt und die Halteteile des Aufbauelements ganz in den Mäulern bzw. den Halteteilen 16 des Rahmens eingeführt sind. Am bolzenförmigen Halteteil 22 kann ein Kopf 23 vorgesehen sein. Es ist hier auch ersichtlich, wie der Steg 15 des Rahmens 1 das Aufbauelement 2 seitlich fixiert. Zur Fixierung in der gezeigten Endlage, und damit zur Verhinderung eines Ausfahrens des Aufbauelements 2 aus dieser Endlage zurück in die Anfangslage, entgegen der Einschubrichtung gemäss dem Pfeil A, kann als Teil der Halteanordnung ein einschraubbarer oder federnder Stift 24 dienen, der in eine nicht sichtbare Bohrung im Aufbauelement eingreift, die das entsprechende Halteteil am Aufbauelement 2 bildet, wenn dieses die dargestellte Endlage erreicht hat. Um das Aufbauelement wieder vom Rahmen 1 zu lösen, muss dieser Stift 24 der Halteanordnung 4 losgeschraubt werden, damit der Stift die Bohrung im Aufbauelement 2 frei gibt und dieses entgegen der Richtung des Pfeils A bewegt werden kann, so dass die Halteanordnung das Aufbauelement wieder frei gibt bzw. die Bolzen 22 aus den Mäulern 16 ausgefahren werden. Danach kann das Aufbauelement von der Ladefläche bzw. vom Rahmen abgehoben werden, zum Beispiel mit einem Kran.

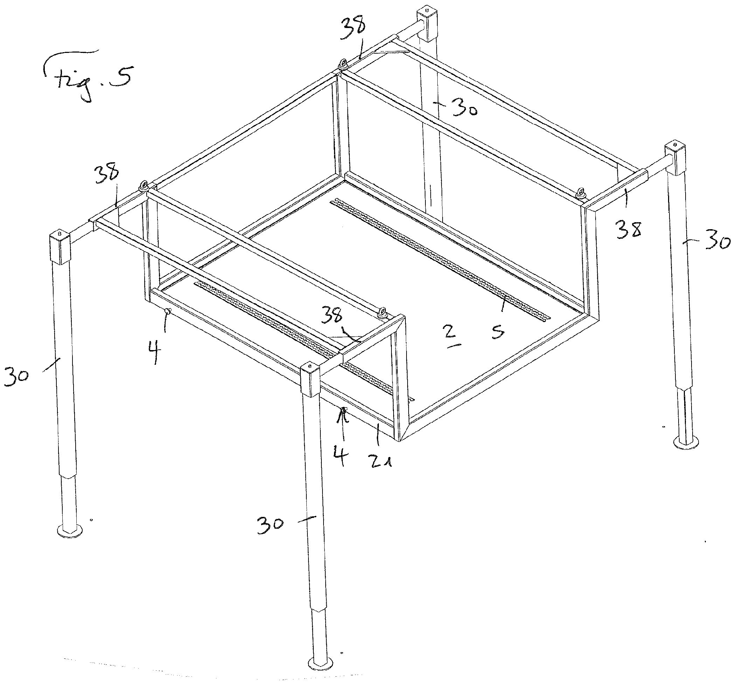

In einer Ausführungsform gemäss Figur 5 kann das Aufbauelement 2 auch mit Aufnahmen 38 für ausfahrbare Stützen 30 versehen sein, insbesondere für mittels Kurbeln oder elektromotorisch höhenverstellbaren Stützen. Somit ist das Aufbauelement 2 auf dem Boden, auf welchem auch das Fahrzeug steht, mit solchen Stützen selbststehend und kann mit den Stützen angehoben werden, so dass das Fahrzeug unter dem Aufbauelement weg gefahren werden kann.

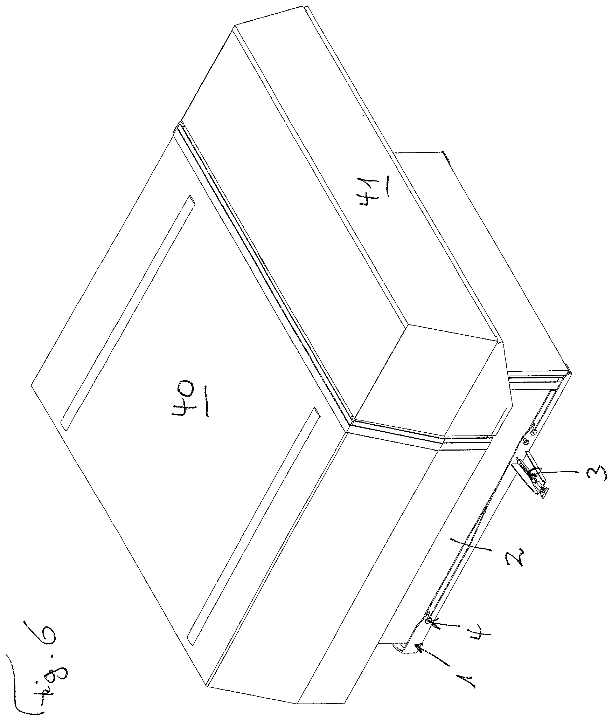

Figur 6 zeigt ein weiteres Beispiel eines Aufbauelements 2, welches als geschlossene Kabine 40 ausgeführt ist. Gleiche Bezugszeichen wie zuvor verwendet zeigen auch hier gleiche Elemente. Die Kabine kann in ihrem oberen Teil aus Kunststoff ausgeführt sein, in ihrem unteren Teil, der auf dem Rahmen 1 aufliegt, kann sie zum Teil aus Metall gefertigt sein. Ein hinterer Abschluss 41 der Kabine wird in der Regel schwenkbar ausgeführt sein, um den Zugang zur Kabine zu ermöglichen. Die nicht dargestellte Ladeklappe des Pick-up-Fahrzeugs kann abmontiert sein oder wird vom oberen Teil der Kabine überragt, wie auch der obere Teil der Kabine die nicht dargestellten Seitenwände der Ladefläche des Pick-up-Fahrzeugs überragt, während sich der untere Teil der Kabine innerhalb des durch Seitenwände, Ladefläche und Ladeklappe begrenzten Laderaums des Pick-up-Fahrzeugs befindet. Auch bei diesem Aufbauelement ist es vorteilhaft, wenn Kurbelstützen vorgesehen werden, wie beim Beispiel von Figur 5.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Vorrichtung zur Platzierung auf der Ladefläche (12) eines Pick-up-Fahrzeugs (10), wobei die Ladefläche vom Fahrzeughersteller vorgesehene Verzurrösen (19) aufweist, **dadurch gekennzeichnet, dass** die Vorrichtung einen Rahmen (1), mindestens ein auf den Rahmen aufsetzbares Aufbauelement (2), Befestigungsmittel (3) und eine Halteanordnung (4) umfasst, wobei der Rahmen (1) und die Befestigungsmittel (3) derart ausgestaltet sind, dass der Rahmen auf der Ladefläche (12) aufliegend durch die Befestigungsmittel (3) an den Verzurrösen (19) lösbar befestigbar ist, und wobei die Halteanordnung (4) erste Halteteile (15, 16, 24) am Rahmen (1) und zweite Halteteile (21, 22, 23) an dem Aufbauelement (2) umfasst, derart, dass das Aufbauelement (2) mittels der Halteanordnung (4) lösbar am Rahmen fixierbar ist.

2. Vorrichtung nach Anspruch 1, wobei der Rahmen (1) mindestens zwei Längsglieder (13), ein endseitiges Querglied (14) sowie mindestens ein davon beabstandetes weiteres Querglied (14') aufweist.

3. Vorrichtung nach Anspruch 2, wobei die Befestigungsmittel (3) rahmenseitig am endseitigen Querglied (14) sowie an je einem der Längsglieder (13) angeordnet sind, insbesondere je an einem vertikalen Steg (15) der Längsglieder.

4. Vorrichtung nach einem der Ansprüche 1 bis 3, wobei die Befestigungsmittel (3) von Hand oder mit Werkzeug verkürzbare bzw. verlängerbare Befestigungselemente umfassen, welche insbesondere Spannschlösser (35) sind.

5. Vorrichtung nach einem der Ansprüche 1 bis 4, wobei die Halteanordnung (4) derart ausgestaltet ist, dass erste Halteteile (15, 16) des Rahmens und zweite Halteteile (22, 23) des Aufbauelements (2) durch eine translatorische Relativbewegung zwischen Rahmen und Aufbauelement entlang den Längsgliedern (13) des Rahmens in Eingriff bringbar sind.

6. Vorrichtung nach einem der Ansprüche 1 bis 5, wobei das Aufbauelement eine Plattform mit Aufnahmemitteln (5) ist, oder eine Plattform mit einem Kran ist, oder wobei das Aufbauelement als Wanne oder Korb ausgebildet ist, oder wobei das Aufbauelement eine Kabine (40) ist, oder wobei das Aufbauelement ein Fahrradträger oder ein Motorradträger ist.

7. Aufbauelement (2) für eine Vorrichtung nach einem der Ansprüche 1 bis 6, wobei das Aufbauelement eine Plattform mit Aufnahmemitteln (5) ist, insbesondere eine Plattform mit einem Kran ist, oder wobei das Aufbauelement als Wanne oder Korb ausgebildet ist, oder wobei das Aufbauelement eine Kabine (40) ist, oder wobei das Aufbauelement ein Fahrradträger oder ein Motorradträger ist, und wobei das Aufbauelement jeweils zweite Halteteile (22, 23) aufweist, welche zum Zusammenwirken mit den ersten Halteteilen (15, 16) der Vorrichtung ausgeführt sind.

8. Pick-up-Fahrzeug mit einer Vorrichtung nach einem der Ansprüche 1 bis 6.

9. Verfahren zur Beladung der Ladefläche (12) eines Pick-up-Fahrzeugs (10) mit einem Aufbauelement (2), wobei die Ladefläche vom Fahrzeughersteller vorgesehene Verzurrösen (19) aufweist, wobei auf der Ladefläche ein Rahmen (2) mittels Befestigungsmitteln (3) auf der Ladefläche (12) aufliegend lediglich an den Verzurrösen lösbar befestigt wird, und wobei das Aufbauelement (2) auf den Rahmen (1) aufgesetzt wird und lediglich am Rahmen mittels einer Halteanordnung (4) lösbar fixiert wird.

10. Verfahren nach Anspruch 9, wobei das auf den Rahmen aufgesetzte Aufbauelement (2) mittels der Halteanordnung durch eine horizontale translatorische Verschiebung am Rahmen fixiert wird.
